Europäisches Patentamt

European Patent Office

Office européen des brevets

(11) Publication number: **0 073 637**
**B1**

# EUROPEAN PATENT SPECIFICATION

(45) Date of publication of patent specification: 07.06.89

(21) Application number: 82304464.9

(22) Date of filing: 24.08.82

(51) Int. Cl.⁴: **C 01 B 33/02,** C 01 B 33/04, B 01 D 53/02

(54) Production of elemental silicon from impure silane feed.

(30) Priority: 24.08.81 US 295654

(43) Date of publication of application:
09.03.83 Bulletin 83/10

(45) Publication of the grant of the patent:
07.06.89 Bulletin 89/23

(84) Designated Contracting States:
DE FR GB IT

(58) References cited:
FR-A-2 172 886
GB-A- 871 614

(73) Proprietor: EAGLE-PICHER INDUSTRIES, INC.
580 Walnut Street
Cincinnati Ohio 45202 (US)

(72) Inventor: Walker, Joe M.
808 Lakeview Drive
Pittsburg Kansas 66762 (US)
Inventor: Potts, Thomas M.
2001 Steve Owens Boulevard
Lot 32 Miami Oklahoma 74354 (US)

(74) Representative: Allen, Oliver John Richard et al
Lloyd Wise, Tregear & Co. Norman House
105-109 Strand
London, WC2R 0AE (GB)

## Description

This invention relates to the production of high purity elemental silicon from an impure thermally decomposable silicon compound, without the need to zone refine or otherwise purify the elemental silicon once formed.

## Background of the invention

The fabrication of semiconductor devices is generally agreed to require silicon of at least the following purity:

TABLE I
Purity requirements for polysilicon[a]

| Electronically active impurity | Parts per billion atomic |
|---|---|
| Group III elements (B, Al, etc.) | <0.3 |
| Group V elements (P, As, etc.) | <1.5 |
| Heavy metals | <0.1[b] |
| Carbon | <300[c] |
| Oxygen | <50[c] |
| All others | <0.001[b] |

[a] See Proceedings of 3rd International Symposium on Silicon Materials, Science & Technology, Vol. 77—2, p. 18, Electrochemical Society.
[b] Activation analysis.
[c] Limits of detection (infrared).

This extremely high degree of purity is referred to in the industry as "electronic grade" purity.

Silicone of these very high purities is currently required in very large quantities; the total annual usage of electronic grade purity silicone alone is in excess of 2500 metric tons. The cost of purifying silicon to these extremely high purity levels, in the large quantities needed, has been a major factor—if not, indeed, a major bottleneck—in the industry.

Such exceedingly high levels of purity are required because of the disastrous electronic affects of even low levels of certain impurities. The most critical of these are electronically active impurities, specifically the Group III elements boron and aluminum, and the Group V elements phosphorus and arsenic.

Originally elemental silicon was purified to the requisite purity by zone refining of previously formed impure elemental silicon. The elemental silicon used for purification by the zone refining process was generally produced by high temperature and/or hydrogen reduction of a decomposable silicon-containing compound such as $SiCl_4$, $SiHCl_3$, or $SiH_4$. As an incident to the decomposition of the silicon-containing compound, impurities present in that compound codeposit and thus appear as impurities in the silicon formed from it. For a description of silicon zone refining purification techniques, see "Zone Melting", William G. Pfann, Wiley and Sons, 1958.

Zone refining can produce silicon of very high purity from such impure silicon. However, zone refining is an expensive and slow technique, requiring very high power input to produce the moving molten zone. Furthermore, due to the relatively large segregation coefficient between boron and silicon, boron impurity is not so effectively removed from the silicon by zone refining.

The method which is presently used commercially to produce polycrystalline silicon is based on the purification of trichlorosilane ($SiHCl_3$) by repetitive distillation, followed by decomposition of the purified compound on a hot silicon filament. Trichlorosilane has a boiling point of 33°C, and is commonly purified by vacuum distillation. It is a corrosive compound, which further complicates its purification. The hydrogen reduction of trichlorosilane takes place at a relatively high temperature, which is a disadvantage because of the higher energy required to sustain the chemical reaction. Another disadvantage is that trichlorosilane is only 20% silicon by weight, so that relatively large weights of that compound must be processed to obtain a desired weight of silicon.

Various other purification techniques are known per se, by which it might be attempted to purify silane gas. These include cryogenic distillation; pressure distillation; solvent extraction in the liquid state; gaseous diffusion; selective absorption (molecular sieve); sublimation; and solid phase zone refining. However, each of those techniques presents serious limitations for ultra high purification of silane.

Gas chromatography is another known purification technique.

In FR—A—2 172 886, there is disclosed a method of producing elemental silicon by decomposition of silane in which a silane feed containing undesirable impurities namely diborane, is injected as a series of regularly spaced pulses into a stream of inert carrier gas which is passed through a gas chromatograph column packed with porous granules impregnated with squalane. The packing differentially retards, the silane and diborane, whereby the silane which elutes from the column is substantially free of diborane.

In "Gas Chromatography—Analysis to Production" Bonmati et al, *Chemical Engineering*, March 24, 1980, pp. 70—72, there is described a large scale gas chromatographic purification technique developed from the teachings of FR—A—2172886. However, as chromatograph column diameter is increased in order to handle the greater throughput needed for production, as distinguished from the small column diameters that are sufficient for analytical separation, flow through the column increasingly departs from ideal plug flow: radial velocity non-uniformities arise, as a result of which the product is less purified than in standard analytical chromatography. These effects become increasingly adverse as column diameter increases. Thus the *Chemical Engineering* article merely indicates that "purities of 99.99% and yields of 98% can be attained". That degree of purity is far short of the ultra high purity required for electronic grade silicons, which is about 100,000× higher than the highest purity referred to in the article. The article does not suggest the application of the purification technique to silane.

Thus, until now no technique has been known for obtaining the extremely high degree of silane-gas purification required if subsequent purification of the silicon itself is to be rendered unnecessary.

The primary objective of this invention, therefore, has been to provide a new and unique process whereby elemental silicon of electronic grade can be produced on an industrial scale, at a cost competitive with or below that of other available techniques, without need for zone refining or any other purification of the elemental product once formed.

Brief description of the invention

A process and apparatus have now been discovered whereby a particular decomposable silicon-containing compound, in relatively impure form, can be purified to an impurity level as low as that of electronic grade silicon, or even purer, and whereby the compound so purified can be decomposed to produce elemental silicon without introducing other impurities and without any other purification procedure. The product can be used for the fabrication of solar cells or semiconductor devices without further purification.

More particularly, the present invention provides a method of producing elemental silicon by decomposition of silane comprising, providing an impure silane gas feed containing undesirable impurities, injecting the feed as a series of regularly spaced pulses into a stream of an inert carrier gas, passing the resulting stream through a gas chromatograph column, the column having a packing which differentially retards the silane and the impurities such that the silane gas component of each respective pulse elutes from the column at a different time than the impurities, separating the silane gas components from the impurities and decomposing the thus separated silane, in the presence of the carrier gas, to produce elemental silicon, characterized in that the silane gas components of each respective pulse elutes from the column as a silane peak, a valve operating during elution of the silane peak of each respective pulse to separate and direct that peak to a separate outlet line from the impurities, the valve being opened only during elution of the silane peak, for so brief a period that the purity of the valved silane and admixed carrier gas is no less than that of electronic grade silicon; and in that there is used "Poropak®" packing material; whereby there is obtained electronic grade silicon of the following purity:

| Impurity | Total parts per billion atomic |
|---|---|
| Group III elements | <0.3 |
| Group V elements | <1.5 |
| Heavy metals | <0.1 |
| Carbon | <300 |
| Oxygen | <50 |
| All others | <0.001 |

The present invention also provides an apparatus for producing silicon comprising a gas chromatograph column having a diameter of at least 10 mm, a silane flow segmenting valve for admitting silane gas containing undesirable gaseous impurities as a series of timed, uniformly spaced pulses into a stream of an inert carrier gas, the column having a packing which differentially retards the flow of the silane and the impurities therethrough such that the silane gas component of each respective pulse elutes from an outlet of the column at a different time than the impurities, a separating valve connected at the column outlet, and means for thermally decomposing the silane gas component so separated characterized in that means (30) operate the separating valve (27) during the flow of the silane gas component therethrough to direct a silane peak of the silane gas component of each sequential pulse to a silane line (35) and for closing the valve (27) no later than the conclusion of the flow of the silane peak therethrough, thereby to separate the silane component from the impurities, and in that said packing is a "Poropak®" packing material; whereby there is obtainable electronic grade silicon of the following purity:

| | Impurity | Total parts per billion atomic |
|---|---|---|
| | Group III elements | <0.3 |
| | Group V elements | <1.5 |
| | Heavy metals | <0.1 |
| | Carbon | <300 |
| | Oxygen | <50 |
| | All others | <0.001 |

The "Poropak®" packing material used in accordance with this invention is made by Waters Associates of Milford, Massachusetts, United States of America.

Certain preferred features of the method and apparatus of this invention are defined in the claims dependent on Claims 1 and 7 respectively.

As indicated above, this technique requires silane, $SiH_4$, as the decomposable silicon-containing compound. In carrying out the process of the invention, a silane gas supply of relatively low degree of purity can be used.

The silane gas purification is carried out by automatically injecting the impure gas from the source as a series of spaced pulses into a carrier gas stream which carries them in "plug" flow into a gas chromatographic column, through which the pulses are carried in sequence by an inert carrier gas such as hydrogen. The components of the impure gas feed are retarded to different degrees by the "Poropak" packing as they move through the column, with the result that they exit at different but precisely spaced time intervals in relation to input time. The emergence from the column of the silane "peak" or portion of the respective pulse is detected at the column outlet, or is timed from the pulse input. The silane peak (including admixed carrier gas), when it emerges, is valved (by a valve responsive to the timer or detector) to a separate receiver from the other gas components, which exit before and after it. The silane gas fraction so separated is then thermally decomposed; or it may be collected, pressurized and then be thermally decomposed. The carrier gas is not decomposed, remains gaseous, and is thereby separated. In the practice of the invention the peak valving is so short as to separate a silane and carrier gas plug of very high purity, having an impurity content no higher than that of electronic grade purity. Thus, the silicone so produced is of electronic purity, and is suitable for use in fabrication of semiconductor devices or solar cells without further purification such as zone refining.

Description of the drawings

The invention can best be further disclosed by reference to the accompanying drawings, in which:

Figure 1 is a flow diagram in schematic form, illustrating the practice of the process of the invention in accordance with a preferred embodiment;

Figure 2 is a schematic diagram illustrating the segmented flow of the impure silane gas feed through the gas chromatographic column, with hydrogen as the carrier gas; and

Figure 3 is a graphical representation showing the relative composition of the output stream from the gas chromatographic column as a function of time, illustrating the cyclic nature of the composition changes by reason of the repetitive segmented introduction of the impure silane into the column.

As previously indicated, this invention requires silane gas, $SiH_4$, as the decomposable source of silicon. Use of this particular compound is needed in order to effectively achieve a sufficient purification of the feed that the silicon, produced by decomposition of that purified feed, does not itself require further purification.

The silane gas used as the feed can be produced by methods known per se, and the particular technique used to produce it is not part of the invention. See, for example, the several production methods listed in *The Merck Index*, 9th Ed., 1976 pp. 1098—9. The impurity content of the silane feed to the purifying column is not crucial to the invention, however higher purity of the feed leads to more economical ultra purification by the method of this invention. The degree of purity of the gas feed can be determined by common analytical gas chromatographic methods.

As produced, silane gas normally contains impurities which carry over into elemental silicon upon thermal decomposition of the gas. These impurities most commonly include boron, arsenic and phosphorus-containing gases, such as diborane ($B_2H_6$), arsine ($AsH_3$), and phosphine ($PH_3$) which, like silane, are gases at room temperature.

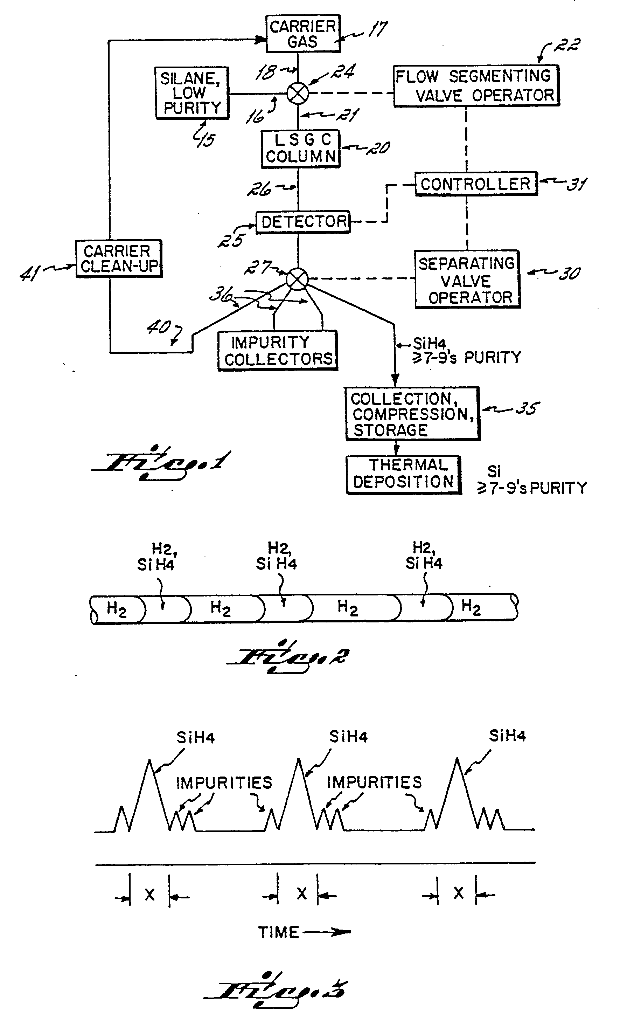

Referring to Figure 1, the impure silane gas is supplied from a source 15 at a constant pressure and temperature to a gas supply line 16.

Silane boils at −112°C, and thus is a gas at room temperature. Unlike trichlorosilane, it need not be specially vaporized for injection into the chromatograph; and this avoids one factor which would adversely affect the uniformity of purification.

In Figure 1, a large scale gas chromatographic column ("LSGC") is indicated at 20. By "large scale" is meant that the unit has a column with a diameter greater than 10 mm, and that it is capable of handling large throughputs. The construction of such a column is known per se; see for example the *Chemical Engineering* article previously identified. The column preferably contains at least 500 theoretical gas chromatographic plates.

A pure carrier gas which is inert (i.e., non-decomposable and unreactive) with respect to silane, the column, the packing and the later decomposition step, for example $H_2$, He, $N_2$, or Ar, is supplied from a bottle or other source 17 at a constant pressure and temperature, through a carrier gas supply line 18. Carrier gas sources with electronic impurity contents far less than electronic grade silicon are commercially available. The carrier gas is supplied at the same pressure as the silane. A valve 24 permits a continuous flow of the carrier gas from line 18 to column inlet line 21. Periodically valve 24 is actuated to admit a "pulse" of silane, that is, a constant, predetermined volume from source 15 through line 16 into the flowing carrier gas.

The valve 24 can be operated by a valve operator 22, which in turn automatically energizes a solenoid. Such automatically operated valves are available commercially, for example from Crawford Fittings, Inc.

The silane pulse rate, time duration, and spacing will depend on column size, operating pressure, temperature, packing, and other factors. Injections at the rate of 5 to 20 pulses per minute are believed most useful for volume production; the interval between pulses must be long enough to ensure no cross contamination of the silane component of any one pulse, as it flows through the column, by the impurities of preceding and following pulses, but must be short enough to allow useful throughput of the silane gas. This can readily be determined from the eluent pattern for the pulses.

Because of the pulsed flow, the flow entering column 20 will comprise an interval of carrier gas only, followed by a pulse of silane-carrier mixture, followed again by a carrier gas interval, and so forth. This is shown diagrammatically in Figure 2.

As previously indicated, the column contains a packing chosen to achieve adequate separation of the impurities in the silane feed pulse, namely the packing is "Poropak" made by Waters Associates of Milford, Massachusetts. The packing is chosen for its ability differentially to retard the various gas components (other than the carrier) as they flow through the column. For the Poropak column material, $B_2H_6$, if present, is typically retarded least; it emerges first, followed by $SiH_4$, then $PH_3$ and $AsH_3$. Figure 3 graphically shows the various component peaks, as they emerge, for a series of pulses. The peak heights and shapes vary with concentrations and other factors, but for a given set of conditions, they remain constant from pulse to pulse.

In order to maximize the throughput, it is desirable to have the peaks no further apart than necessary for separation. Squeezing the peaks closer together is accomplished by making the injected samples larger, other things remaining constant, but for high purity it is desirable to have the peaks well separated, sufficiently to permit the desired "peak cutting" or valving, to be described. The operation of the column is thus a compromise between these two requirements.

The nature of the effluent peaks can be determined, as is known, by use of a thermal conductivity sensor 25, having a detector in outlet line 26. Such detectors are well known, see "Modern Methods of Chemical Analysis", Pecsok and Shields, John Wiley and Sons, 1968, p. 75. As the components elute discretely, the conductivity of the gas changes; Figure 3 reflects the changes in effluent gas conductivity for a series of pulses. The pulse injections are spaced so that no measurable impurities will overlap the purified silane pulses as they emerge from the column.

Column outlet line 26 contains a separating valve generally designated at 27, having a valve operator 30 which is responsive to a solenoid. Separating valve 27 is operable to direct the outlet gas from line 26 to any of two or more separate outlets. In the preferred embodiment shown, valve 27 is operated by the separating valve operator 30 to direct the silane (and admixed carrier) component when it reaches the valve, to a silane collector 35. The other impurities are directed through lines 36 to separate collectors. The carrier gas (i.e., the flow other than the silane peak and the impurity peaks) is directed to a hydrogen recycle line 40 which contains a conventional hydrogen purification device 41.

Referring to Figure 3, the separating valve (27 in Fig. 1) is opened by operator 30 for an interval such as that designated by X, corresponding to the passage of the silane "peak" through valve 27, to direct the silane and admixed carrier to receiver 35. As the impurities elute, valve 27 is actuated by operator 30 to direct them to the impurity outlets 36. It will be appreciated that since the impurities elute separately from the silane, the valve can be operated for the elution of each to collect them separately, if desired. These individually collected impurities may have sufficient value that their collection may be economically attractive.

Between the elution of the components of the respective pulses, the carrier gas elutes continuously from the column. As indicated, separating valve 27 is desirably operated to direct the carrier (e.g., hydrogen) through a carrier recycle line 40, back to carrier gas source 17.

Separating valve operator 30 is preferably responsive to a detector 25 which responds to the elution of a component at a particular time interval after injection of the respective pulse. For this purpose a controller 31 (which may be a timer) establishes an appropriate time window within which the silane elutes; when, within this window, detector 25 detects a sharp change in thermal conductivity, it signals valve operator 30 to open the valve to direct the silane to receiver 35. Alternatively, if the gas chromatographic parameters are sufficiently well controlled, valve operator 30 may be triggered solely by a timer at 31. Timers and detectors suitable for such use are known per se, and do not comprise the invention.

Other things remaining constant, the purity of the silane collected will depend upon the relative period during which valve 27 directs the output gas to receiver 35, in comparison to the duration of the actual silane peak. In other words, the shorter the period of time during which the silane is directed to the receiver, in relation to the width of the silane peak, the more precise the separation will be; but correspondingly, the smaller the yield of purified silane. This factor ultimately controls the purity of the final product silicon. However, the impurity concentrations of the admixed silane and carrier peak should not exceed the impurity levels of electronic grade silicon set forth previously. If, at given gas purification conditions the resistivity of the silicon product is, say, 100 ohms cms, its purity can be increased by decreasing the period of time in which the silane gas component is directed to the receiver.

The precision of the chromatographic separation diminishes with increasing pressure differential from the inlet to the outlet. It is normally desirable to operate the column at the lowest practical positive pressure differential to obtain efficient utilization of the chromatographic column.

Silane can be thermally decomposed by techniques known per se, for example, heated filament free space reactor, fluidized bed, etc. The decomposition technique which is especially useful and which is preferred because it minimizes the introduction of the impurities during decomposition, is that of decomposing the gas in a fluidized bed of fine silicone particles. Apparatus which can be used for this type of thermal decomposition is taught in DOE/JPL Final Report, Contract No. 954334, dated June 1979. In that technique, the bed on which the silane is decomposed itself must comprise silicon beads previously formed. The silicon particles act as a heat transfer medium to decompose the gas, which deposit additional layers of silicon on the particles. In this decomposition, the inert carrier gas is not decomposed and is thereby separated. (In any event the carrier atoms do not constitute an electronically active impurity in the product silicon itself).

Silane is uniquely suited for purification to an ultra high degree by large scale gas chromatography. Moreover, because it is a gas, it can be injected into the carrier gas stream at reproducible, uniform flow rates, without the irregularities that would accompany vaporization of a solid or liquid. A solid column packing has been found by which high purification can be achieved simultaneously with useful throughput rates. Moreover, the purified gas can be converted to solid silicon pyrolytically, directly following elution from the purification step, which avoids cryogenic trapping that is often required in order to collect other gaseous outputs.

## Claims

1. A method of producing elemental silicon by decomposition of silane comprising, providing an impure silane gas feed containing undesirable impurities, injecting the feed as a series of regularly spaced pulses into a stream of an inert carrier gas, passing the resulting stream through a gas chromatograph column, the column having a packing which differentially retards the silane and the impurities such that the silane gas component of each respective pulse elutes from the column at a different time than the impurities, separating the silane gas components from the impurities and decomposing the thus separated silane, in the presence of the carrier gas, to produce elemental silicon,

characterized in that the silane gas components of each respective pulse elutes from the column as a silane peak, a valve operating during elution of the silane peak of each respective pulse to separate and direct that peak to a separate outlet line from the impurities, the valve being opened only during elution of the silane peak, for so brief a period that the purity of the valved silane and admixed carrier gas is no less than that of electronic grade silicon; and in that there is used "Poropak®" packing material whereby there is obtained electronic grade silicon of the following purity:

| Impurity | Total parts per billion atomic |
|---|---|
| Group III elements | <0.3 |
| Group V elements | <1.5 |
| Heavy metals | <0.1 |
| Carbon | <300 |
| Oxygen | <50 |
| All others | <0.001 |

2. A method as claimed in claim 1 wherein the silane feed contains impurities of the group $AsX_3$, $BX_3$, $SiHX_3$, $SiH_3X$, and $PX_3$ where X is a halogen.

3. A method as claimed in Claim 2 wherein the silane feed contains one or more gaseous compounds of the group $AsH_3$, $B_2H_6$ and $PH_3$.

4. A method as claimed in any preceding claim wherein the carrier gas flows continuously through the column and wherein the silane gas is admitted to the carrier gas stream as square wave pulses separated from start to start by an interval sufficient for elution of all the respective components of the pulse.

5. A method as claimed in any preceding claim wherein the valve is open only for a central portion of the silane peak.

6. A method as claimed in any preceding claim wherein no step of purifying the elemental silicon is present.

7. An apparatus for producing silicon comprising a gas chromatograph column having a diameter of at

6

least 10 mm, a silane flow segmenting valve for admitting silane gas containing undesirable gaseous impurities as a series of timed, uniformly spaced pulses into a stream of an inert carrier gas, the column having a packing which differentially retards the flow of the silane and the impurities therethrough such that the silane gas component of each respective pulse elutes from an outlet of the column at a different time than the impurities, a separating valve connected at the column outlet, and means for thermally decomposing the silane gas component so separated characterized in, that means (30) operate the separating valve (27) during the flow of the silane gas component therethrough to direct a silane peak of the silane gas component of each sequential pulse to a silane line (35) and for closing the valve (27) no later than the conclusion of the flow of the silane peak therethrough, thereby to separate the silane component from the impurities, and in that said packing is a "Poropak®" packing material; whereby there is obtainable electronic grade silicon of the following purity:

| Impurity | Total parts per billion atomic |
| --- | --- |
| Group III elements | <0.3 |
| Group V elements | <1.5 |
| Heavy metals | <0.1 |
| Carbon | <300 |
| Oxygen | <50 |
| All others | <0.001 |

8. An apparatus as claimed in Claim 7 further including a detector (25) for detecting the passage of the silane gas component of each pulse.

9. An apparatus as claimed in Claim 8 wherein the separating valve (27) is responsive to the detector (25), to valve the flow of the silane gas component.

10. An apparatus as claimed in any one of Claims 7 to 9 wherein the separating valve (27) is responsive to a timer (31) which is actuated by the silane flow segmenting valve, to operate the separating valve at a predetermined time thereafter.

11. An apparatus as claimed in any one of Claims 7 to 10 wherein the operating means (30) is responsive both to a signal from a timer (31) actuated by the flow segmenting valve (24) and to a signal from a detector (25) which detects the passage of the silane component from the column (20) within a pre-established time period after actuation of the timer.

## Patentansprüche

1. Verfahren zur Herstellung elementaren Siliziums durch Aufspaltung von Silan, mit folgenden Verfahrensschritten:

Bereitstellung eines unerwünschte Verunreinigungen enthaltenden Silanausgangsgases, Einblasen des Silanausgangsgases als eine Reihe gleichmäßig beabstandeter Pulse in einen Strom eines inerten Trägergases, Durchleiten des resultierenden Gasstroms durch eine Gaschromatographensäule, welche eine Packung enthält, die das Silan und die Verunreinigungen unterschiedlich zurückhält, so daß die Silangaskomponente jedes Pulses zu einer anderen Zeit aus der Säule austritt, als die Verunreinigungen, wobei die Silangaskomponenten von den Verunreinigungen getrennt werden und das so separierte Silan in Anwesenheit des Trägergases aufgespaltet wird, um elementares Silizium zu produzieren,

dadurch gekennzeichnet, daß Silangaskomponenten jedes Pulses als ein Silan-Peak aus der Säule austreten, wobei ein während des Austritts des Silan-Peaks jedes Pulses arbeitendes Ventil dafür sorgt, daß der Peak getrennt und zu einer von den Verunreinigungen getrennten Ausgangsleitung geleitet wird, wobei das Ventil nur während des Austritts des Silan-Peaks geöffnet ist, und zwar für so eine kurze Zeit, daß die Reinheit des aus dem Ventil kommenden Silans und des zugesetzten Trägergases nicht geringer ist als die von in der Elektronik verwendbarem Silizium, und daß als Packungsmaterial "Porapak®" verwendet wird, wodurch in der Elektronik verwendbares Silizium folgender Reinheit erreichbar ist:

| Verunreinigung | Gesamtanzahl atomarer Teile in ppb |
| --- | --- |
| Elemente der Gruppe III | <0.3 |
| Elemente der Gruppe V | <1.5 |
| Schwermetalle | <0.1 |
| Kohlenstoff | <300 |
| Sauerstoff | <50 |
| alle anderen | <0.001 |

2. Verfahren nach Anspruch 1, in dem das Silanausgangsmaterial Verunreinigungen der Gruppe $AsX_3$, $BX_3$, $SiHX_3$, $SiH_3X$, und $PX_3$ enthält, wobei X ein Halogen darstellt.

3. Verfahren nach Anspruch 2, in dem das Silanausgangsmaterial eine oder mehrere gasförmige Komponenten der Gruppe AsH$_3$, B$_2$H$_6$, und PH$_3$ enthält.

4. Verfahren nach einem der vorstehenden Ansprüche, in dem das Trägergas kontinuierlich durch die Säule strömt und bei dem das Silangas dem Trägergasstrom als Rechteckpulse zugeführt werden, deren Pulsanfänge durch ein Zeitintervall voneinander getrennt sind, welches zum Austritt aller entsprechenden Komponenten des Pulses aus der Säule ausreicht.

5. Verfahren nach einem der vorstehenden Ansprüche, in dem das Ventil nur für einen Mittelteil des Silan-Peaks geöffnet ist.

6. Verfahren nach einem der vorstehenden Ansprüche, in dem kein Verfahrensschritt zur Reinigung des elementaren Siliziums enthalten ist.

7. Vorrichtung zur Herstellung von Silizium mit einer Gaschromatographensäule mit einem Durchmesser von wenigstens 10 mm, mit einem Silanstrom-Segmentierungsventil zur Zufuhr von unerwünschte gasförmige Verunreinigungen enthaltendem Silangas als eine Reihe von zeitlich abgestimmten, gleich beabstandeten Pulsen in einen Strom eines inerten Trägergases, wobei die Säule eine das durchströmende Silan und die Verunreinigungen unterschiedlich zurückhaltende Packung aufweist, so daß die Silangaskomponente jedes Pulses und die Verunreinigungen zu verschiedenen Zeiten aus einem Auslaß der Säule austreten, mit einem an den Säulenauslaß angeschlossenen Separations-Ventil, und mit Mitteln zur thermischen Aufspaltung der so separierten Silangaskomponente, dadurch gekennzeichnet, daß Mittel (30) das Separations-Ventil (27) während des Durchströmens der Silangaskomponente steuern, um einen Silan-Peak der Silangaskomponente jedes aufeinanderfolgenden Pulses zu einer Silanleitung (35) zu leiten, und zum Schließen des Ventils (27) zu einem Zeitpunkt, der nicht später als die Beendigung des Durchströmens des Silans-Peaks liegt, wobei die Silankomponente von den Verunreinigungen separiert wird, und daß die Packung aus "Porapak®"-Packungsmaterial besteht, wodurch in der Elektronik verwendbares Silizium folgender Reinheit erreichbar ist:

| Verunreinigung | Gesamtanzahl atomarer Teile in ppb |
|---|---|
| Elemente de Gruppe III | <0.3 |
| Elemente der Gruppe V | <1.5 |
| Schwermetalle | <0.1 |
| Kohlenstoff | <300 |
| Sauerstoff | <50 |
| alle anderen | <0.001 |

8. Vorrichtung nach Anspruch 7, die ferner einen Detektor (25) zur Registrierung des Durchgangs der Silangaskomponente jedes Pulses aufweist.

9. Vorrichtung nach Anspruch 8, in der das Separations-Ventil (27) in Abhängigkeit des Detektors (25) arbeitet, um das Durchströmen der Silangaskomponente zu steuern.

10. Vorrichtung nach einem der Ansprüche 7 bis 9, in der das Separations-Ventil (27) in Abhängigkeit eines von dem Silanstrom-Segmentierungsventil betätigten Zeitgebers (31) arbeitet, um das Separations-Ventil eine vorbestimmte Zeit danach zu betätigen.

11. Vorrichtung nach einem der Ansprüche 7 bis 10, in der das Steuermittel (30) sowohl in Abhängigkeit eines Signals von dem durch das Strom-Segmentierungsventil (24) betätigten Zeitgebers (31) als auch eines Signals von einem Detektor (25) arbeitet, welcher den Durchgang der Silankomponente von der Säule (20) innerhalb einer voreingestellten Zeitperiode nach Betätigung des Zeitgebers registriert.

**Revendications**

1. Procédé de préparation de silicium élémentaire par décomposition du silane, comprenant la fourniture d'une alimentation en silane gazeux contenant des impuretés indésirables, l'injection de l'alimentation sous la forme d'une série d'impulsions régulièrement espacées dans un courant d'un gaz vecteur inerte, l'envoi du courant obtenu à travers une colonne de chromatographie en phase gazeuse, la colonne ayant un remplissage qui retarde différentiellement le silane et les impuretés de telle sorte que le constituant silane gazeux de chaque impusion respective s'élue de la colonne à un temps différent de celui des impuretés, la séparation des constituants silane gazeux des impuretés et la décomposition du silane ainsi séparé, en présence du gaz vecteur, pour produire du silicium élémentaire, caractérisé en ce que les constituants silane gazeux de chaque impulsion respective s'éluent dans la colonne sous la forme d'un pic de silane, une soupape fonctionnant au cours de l'élution du pic du silane de chaque impulsion respective pour séparer et envoyer le pic dans une canalisation de sortie séparée des impuretés, la soupape n'étant ouverte qu'au cours de l'élution du pic du silane pendant un temps tellement court que la puretée du silane séparé par la soupape et du gaz vecteur qui lui est mélangé n'est pas inférieure à celle d'un silicium de qualité électronique; et en ce qu'on utilise comme matière de remplissage du "Porapak®"; grâce à quoi on obtient un silicium de qualité électronique ayant la pureté suivante:

| Impureté | Parties totales par milliards (atomiques) |
|---|---|
| Eléments du Groupe III | <0,3 |
| Eléments du Groupe V | <1,5 |
| Métaux lourds | <0,1 |
| Carbone | <300 |
| Oxygène | <50 |
| Tous les autres | <0,001 |

2. Procédé selon la revendication 1, dans lequel l'alimentation en silane contient des impuretés du groupe $AsX_3$, $BX_3$, $SiHX_3$, $SiH_3X$ et $PX_3$ où X est un halogène.

3. Procédé selon la revendication 2, dans lequel l'alimentation en silane contient un ou plusieurs composés gazeux du groupe $AsH_3$, $B_2H_6$ et $PH_3$.

4. Procédé selon l'une quelconque des revendications précédentes, dans lequel le gaz vecteur s'écoule en continu à travers la colonne et dans lequel le silane gazeux est admis dans le courant de gaz vecteur sous forme d'impulsions d'ondes carrées séparées de départ d'impulsion en départ d'impulsion par un intervalle suffisant pour l'élution de tous les constituants respectifs de l'impulsion.

5. Procédé selon l'une quelconque des revendications précédentes, dans lequel la soupape n'est ouverte que pour une partie centrale du pic du silane.

6. Procédé selon l'une quelconque des revendications précédentes, dans lequel aucun stade de purification du silicium élémentaire n'est effectué.

7. Appareil pour la préparation du silicium comprenant une colonne de chromatographie en phase gazeuse ayant un diamètre d'au moins 10 mm, une soupape de segmentation du courant de silane pour admettre du silane gazeux contenant des impuretés gazeuses indésirables sous la forme d'une série d'impulsions temporisées, uniformément espacées dans un courant d'un gaz vecteur inerte, la colonne ayant un remplissage qui retarde différentiellement l'écoulement du silane et des impuretés à travers celui-ci de telle sorte que le constituant silane gazeux de chaque impulson respective s'élue d'un orifice de sortie de la colonne à un temps différent de cleui des impuretés, une soupape de séparation reliée à l'orifice de sortie de la colonne, et des moyens pour décomposer thermiquement le constituant silane gazeux ainsi séparé, caractérisé en ce que le moyen (30) actionne la soupape de séparation (27) au cours de l'écoulement du constituant silane gazeux à travers celle-ci pour envoyer un pic de silane du constituant silane gazeux de chaque impulsion séquentielle dans une canalisation de silane (35) et pour fermer la soupape (27) pas plus tard que la fin de l'écoulement du pic de silane à travers celle-ci pour séparer ainsi le constituant silane des impuretés, et en ce que ce remplissage est une matière de remplissage "Porapak®", grâce à quoi on peut obtenir un silicium de qualité électronique ayant la pureté suivante:

| Impureté | Parties par milliards totales (atomiques) |
|---|---|
| Eléments du Groupe III | <0,3 |
| Eléments du Groupe V | <1,5 |
| Métaux lourds | <0,1 |
| Carbone | <300 |
| Oxygène | <50 |
| Tous les autres | <0,001 |

8. Appareil selon la revendication 7, contenant en outre un détecteur (25) pour détecter du constituant silane gazeux de chaque impulsion.

9. Appareil selon la revendication 8, dans lequel la soupape de séparation (27) réagit au détecteur (25) en laissant passer le courant du constituant silane gazeux.

10. Appareil selon l'une quelconque des revendications 7 à 9, dans lequel la soupape de séparation (27) est sensible à un chronomètre (31) qui est actionné par la soupape de segmentation de l'écoulement du silane pour faire fonctionner la soupape de séparation pendant un temps déterminé d'après celui-ci.

11. Appareil selon l'une quelconque des revendications 7 à 10, dans lequel le moyen (30) est sensible à la fois à un signal provenant d'un chronomètre (31) actionné par la soupape de segmentation de l'écoulement (24) qui détecte la sortie du constituant silane de la colonne (20), dans un temps déterminé à l'avance avant la mise en route du chronomètre.

*Fig. 1*

*Fig. 2*

*Fig. 3*